# EUROPEAN PATENT SPECIFICATION

(11) **EP 0 206 454 B1**
(45) Date of publication and mention of the grant of the patent: **30.06.1993**
(21) Application number: 86302387.5
(22) Date of filing: 01.04.1986
(51) Int. Cl.: G06K 7/10, G02B 26/10, G02B 27/12

(54) **Stationary hologram scanner**
Fester Hologrammabtaster
Balayeur d'hologramme stationnaire

(30) Priority: 12.06.1985 JP 127759/85; 12.06.1985 JP 127760/85; 03.02.1986 JP 21558/86
(43) Date of publication of application: 30.12.1986
(73) Proprietor: MITSUBISHI DENKI KABUSHIKI KAISHA, Tokyo 100 (JP)
(72) Inventor: Mikami, Izumi c/o Tsushinki Seisakusyo, Amagasaki-Shi Hyogo-Ken (JP); Nishi, Kazurou c/o Oyo-Kiki Kenkyusyo, Amagasaki-Shi Hyogo-Ken (JP); Harada, Takashi c/o Tsushinki Seisakusyo, Amagasaki-Shi Hyogo-Ken (JP); Edo, Hidekazu c/o Tsushinki Seisakusyo, Amagasaki-Shi Hyogo-Ken (JP); Hatanaka, Yasuchika c/o Seigyo Seisakusyo, Hyogo-Ku Kobe-Shi Hyogo-Ken (JP)
(74) Representative: Boon, Graham Anthony

(56) References cited:
- EP-A- 0 069 306
- WO-A-80/00886
- DE-A- 2 449 958
- PATENT ABSTRACTS OF JAPAN, vol. 8, no. 242 (P-311)[1679], 7th November 1984; & JP-A-59 114 514
- PATENT ABSTRACTS OF JAPAN, vol. 7, no. 220 (P-226)[1365], 30th September 1983; & JP-A-58 111 916
- PATENT ABSTRACTS OF JAPAN, vol. 7, no. 220, (P-226)[1365], 30th September 1983; & JP-A-58 113 909

## Description

The present invention relates to a stationary hologram scanner installed at a register in a market or the like for reading bar codes printed on goods.

In recent years, bar codes printed on goods are read to carry out the counting and the inventory control in not only large scale supermarkets but also general stores. A hologram scanner is used as one kind of apparatus for reading bar codes.

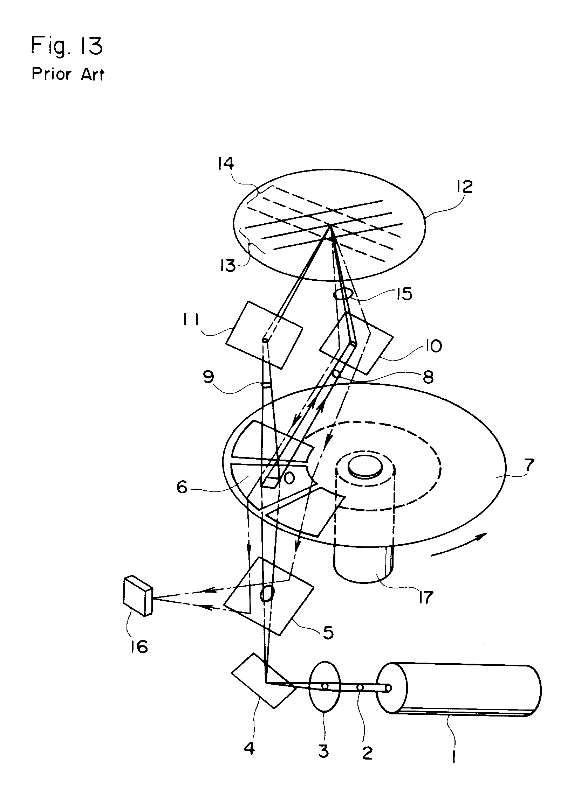

The conventional stationary hologram scanner is described below with reference to FIG. 13 which is a schematic drawing showing the construction thereof. This scanner has the features set out in the preamble of Claim 1, and is also described in EP-A-0069306.

Referring now to FIG 13, reference numeral 1 designates a laser oscillator, 2 designates a light beam irradiated from the laser oscillator 1, 3 designates a lens, 4 designates a mirror, and 5 designates a perforated mirror provided with an opening for the light beam 2 to pass therethrough, Reference numeral 6 designates hologram lenses for deflecting the light beam 2, and 7 designates a hologram disk provided with said hologram lenses. The lenses are equal in number to the scanning lines and their centers are offset by a distance corresponding to the pitch of the scanning lines. 8 and 9 designate a first scanning beam and a second scanning beam diffracted to positions which are spatially separated, respectively. 10 and 11 designate mirrors reflecting the scanning beams 8 and 9 toward a reading window 12 respectively, 12 designates a reading window on which bar codes are disposed, 13 and 14 designate scanning lines produced by the scanning beams 8 and 9 respectively, 15 designates light scattered by bar codes of a label disposed on the reading window 12, 16 designates an optical detector, and 17 designates a motor for rotating the hologram disk 7.

In operation, the light beam 2 irradiated from the laser oscillator 1 is successively incident upon each of the hologram lenses 6 through the lens 3, the mirror 4 and the perforated mirror 5. Since the hologram disk 7 is rotated by the motor 17, the light beam 2 is deflected by the hologram lenses 6 installed on the hologram disk 7 to transmit scanning beams having directions equal in number to the number of hologram lenses 6. Of these beams the first scanning beam 8 and the second scanning beam 9 are representative. Since the centers of the hologram lenses 6 are offset with respect to each other, the scanning beams 8, 9 are shifted in a direction perpendicular to a tangent at a point 0 on the hologram disk 7. In other words, the scanning beams 8, 9 transmitted from the hologram lenses 6 are radially separated from each other at suitable distances by offsetting the centers of the hologram lenses 6. Thus, the mirrors 10, 11 for reflecting the scanning beams 8, 9 toward the reading window 12 are easy to install.

The scanning beams 8, 9 are reflected by the mirrors 10, 11, which are installed at predetermined angles and positions, to be reflected toward the reading window 12, whereby the scanning on the reading window by the scanning lines 13, 14 is carried out.

FIG. 13 is drawn as if two scanning beams, and hence two scanning lines, were generated from one hologram lens 6 but, in fact, only one scanning beam can be obtained from each hologram lens 6. In FIG 13 the scanning beam obtained when the next hologram lens enters the optical path of the light beam 2 by rotation of the hologram disk 7, is superposed on the illustration of the first scanning beam. Thus, scanning beams equal in number to the number of hologram lenses 6 are irradiated in different upward directions from the hologram disk 7, and mirrors equal in number to the number of the scanning beams (and hence the number of hologram lenses), or more in number, are arranged to reflect the scanning beams toward the reading window 12.

Upon scanning of bar codes of a label by the scanning beams 8, 9 and others, the light 15 scattered manner by the bar codes arrives at the perforated mirror 5 along a path which is the reverse of the scanning beams, where it is reflected to be condensed into the optical detector 16. The optical detector 16 detects the scattered light 15 and converts it into an electric signal, thereby optically reading bar codes.

In order that such a hologram scanner can read bar codes orientated in any directions, with high accuracy, it is necessary to increase the number of scanning lines in a reading time as far as possible. That is to say, it is necessary to generate a scanning pattern having many scanning lines in each of many directions.

However, the above described conventional stationary hologram scanner has problems in that mirrors equal to the directions of scanning lines, or more in number, must be arranged between the hologram lenses and the reading window, and since these mirrors must reflect beams deflected by the hologram lenses and used for scanning each mirror, it is necessary for each mirror to be of a large size, thus producing a large sized total optical system. Accordingly, the conventional hologram scanner has been inevitably large-sized, and an operator operating this hologram scanner has been forced to operate either standing, or seated in an unnatural and unreasonable posture, in the case where an operator is located opposite a customer with a hologram scanner placed between them, since the operator's legs (in particular knees) are brought into collision with the casing of the hologram scanner.

In view of the above described circumstances, it has been proposed to make the hologram scanner of a small size by adopting a construction in which the mirrors 10, 11 etc. are not positioned between the hologram scanner 7 and the reading window 12 as in the conventional hologram scanner of FIG 13. In order to make such a construction possible, it is necessary only for a plurality of light beams to be incident upon the positions of the hologram lenses 6 of the hologram disk 7 to generate a plurality of scanning beams, instead of deflecting one light beam 2 in a plurality of directions by the hologram lenses 6 of the hologram disk 7 which is rotating. Since the scanning beams are irradiated from a peripheral portion of the hologram disk 7, if the centers of the hologram lenses are positioned so that the scanning beams may be condensed at one point (for example the reading window), a plurality of mirrors, 10, 11 etc disposed between the hologram disk 7 and the reading window 12 shown in FIG. 13 are not necessary.

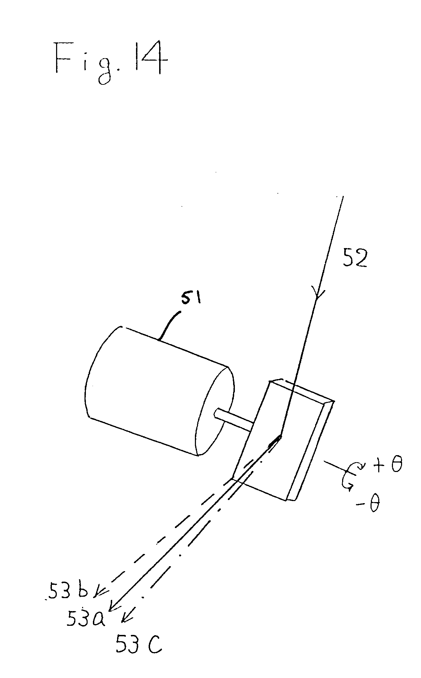

However, in order to realize such a construction, an apparatus is necessary for causing light beams to be incident upon a plurality of hologram lenses 6 installed at the predetermined positions on the hologram disk 7. For example, a light beam-switching over apparatus shown in FIG. 14 has been proposed.

Referring to FIG. 14, reference numeral 52 designates an incident light beam, 50 designates a rotating mirror rotated by a motor 51, and 53 (53a, 53b and 53c) designates reflected light beams.

The actions of such a light beam-switching over apparatus are described below.

The light beam 52 incided upon the rotating mirror 50 is reflected. If the rotating mirror 50 is not inclined (as shown by a full line in FIG. 14), the reflected light beam 53 turns to a direction 53a in accordance with the law of reflection. If the rotating mirror 50 is inclined by + ϑ°; the reflected light beam 53 turns to a direction 53b. In addition, if the rotating mirror 50 is inclined by - ϑ°, the reflected light beam 53 turns to a direction 53c. Accordingly, the direction of the reflected light beam 53 can be switched over in a range from 53a to 53c by controlling the inclination of the rotating mirror 50 by ± ϑ°.

However, such a light beam-switching over apparatus has disadvantages in that the rotating mirror 50 cannot change the inclination thereof in a short time as a control speed increases, thereby producing a time loss in the switch-over of the direction of a light beam, the reflected light is not stabilized due to the vibration of a reflecting surface, and the rotating mirror 50, the motor 51 and the control apparatus thereof are very expensive.

According to the present invention there is provided a stationary hologram scanner having the features of the characterizing clause of claim 1.

The hologram scanner according to the present invention can be so constructed as to read bar codes without needing a large sized optical system, even though the bar codes may be laid in any direction against a reading window.

The major parts of the optical system are preferably housed in a portion closer to one side thereof, whereby the cross section of the other portion thereof is reduced as far as possible so that an operator can operate while taking a seat in a reasonable and natural posture.

The hologram scanner according to the present invention can be simple in construction and in operation, and have high accuracy and fidelity.

In the accompanying drawings:
FIG. 1 is a schematic diagram showing a construction of a stationary hologram scanner according to the present invention,
FIG. 2 is a schematic diagram showing a construction of a beam-splitter as a light beam-switching over apparatus of a stationary hologram scanner shown in FIG. 1,
FIG. 3 is a schematic diagram showing the switching-over of a beam by the beam-splitter shown in FIG. 2,
FIG. 4 is a schematic diagram showing a construction of an optical system of a stationary hologram scanner according to the present invention,
FIG. 5 is a schematic diagram showing a construction of a beam-splitter as a light beam-switching over apparatus according to the second embodiment of the present invention,
FIG. 6 is a schematic diagram showing switching-over of a beam by the beam-splitter shown in FIG. 5,
FIGS. 7 and 8 are schematic diagrams showing a construction of a beam-splitter as a light beam-switching over apparatus according to the third embodiment of the present invention,
FIG. 9 is a schematic diagram showing switching-over of a beam by the beam-splitter shown in FIGS. 7 and 8,
FIGS. 10, 11 and 12 are schematic diagrams showing a construction of a beam-splitter as a light beam-switching over apparatus according to the fourth embodiment of the present invention,
FIG. 13 is a schematic diagram showing a conventional stationary hologram scanner,
FIG. 14 is a schematic diagram showing a construction of the conventional beam-switching over apparatus and the switching-over of a beam by the conventional beam-switching over apparatus.

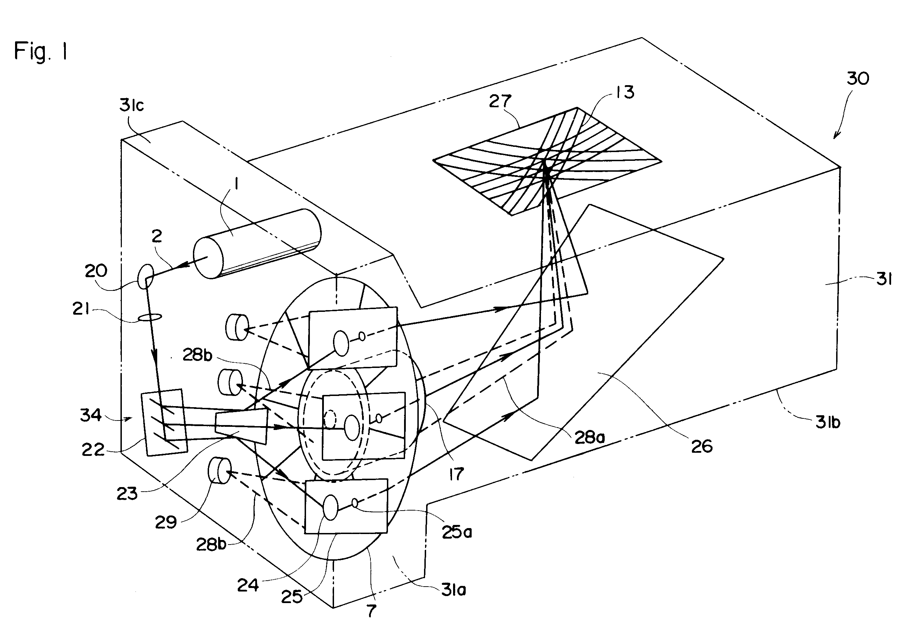

The preferred embodiments of the present invention are described below with reference to the accompanying drawings. FIGS. 1 to 3 show a stationary hologram scanner according to one embodiment of the present invention, reference numeral 1 designating a laser oscillator , 2 designating a light beam, 20 designating a mirror, 21 designating a lens, 22 designating a beam-splitter as a light beam-switching over apparatus for dividing the light beam 2 into three stages, namely an upper stage, a middle stage and a lower stage, in a time division manner, 23 designating a prism mirror for reflecting or transmitting the light beam 2 divided into three stages in the predetermined direction 24 designating mirrors for reflecting the light beam coming from the prism mirror 23 toward openings of perforated mirrors 25, 7 designating a hologram disk whose rotational axis is arranged parallel to a surface of a reading window 27 above which bar codes of goods are disposed, 17 designating a motor for rotating the hologram disk 7, 26 designating a mirror for reflecting light beams which have passed through the openings of the perforated mirrors 25, in the direction toward the reading window 27, 13 designating scanning lines projected on the reading window 27, 28a designating a part of the light scattered from bar codes (not shown), 28b designating scattered light collected by hologram lenses (a plurality of hologram lenses are installed on the hologram disk 7 in the same manner as in the conventional one but not shown), and 29 designating a photoelectric conversion apparatus for receiving the scattered light 28b and converting it into electric signals.

Of the above described members, the members other than the reading window 27 are housed in a casing 31 and the reading window 27 is formed in the upper side surface of the casing 31 in the form of an opening. In addition, the members housed in the casing 31 are concentrically housed in a portion 31a adjacent one side of the casing 31 and having a cross section larger than that of a portion 31b at the side 30 where an operator is positioned.

In addition, in the above described construction the laser oscillator 1, the mirror 20, the lens 21, the beam-splitter 22, the prism mirror 23 and the mirror 24 compose a light beam directing means 34 for causing light beams, which are equal in number to to the number of scanning directions necessary for reading bar codes in number, to be incident incide upon hologram lenses, arranged at the predetermined positions different from each other, of the hologram disk 7.

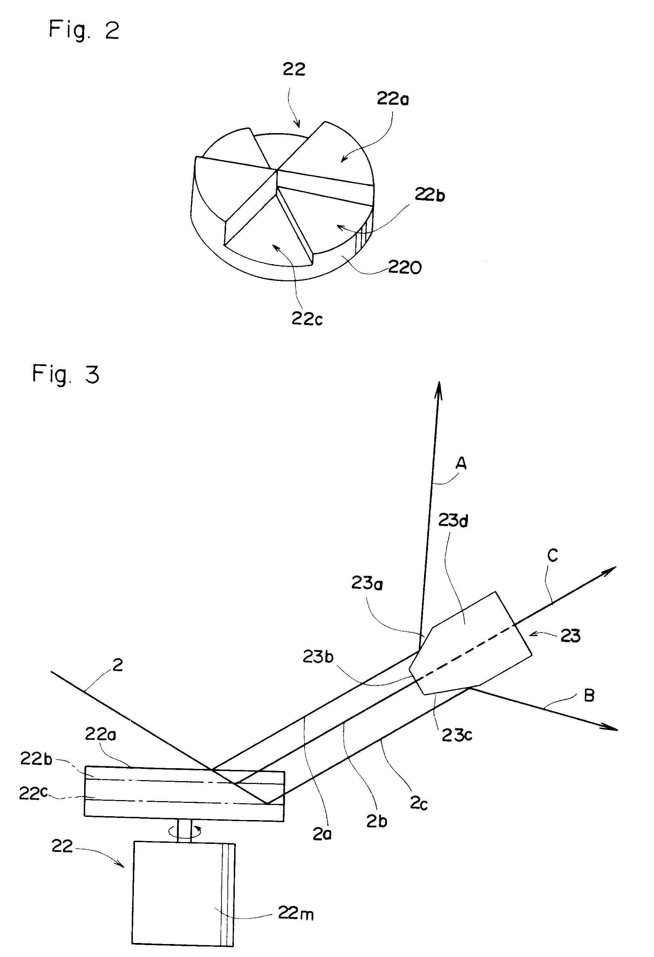

Referring to FIG. 2, which is a schematic diagram showing a construction of the beam splitter 22, and FIG. 3 which is a schematic diagram showing the switching over of a light beam by the beam-splitter shown in FIG. 2, reference numeral 220 designates a rotating mirror, 22m designating a motor for rotating the rotating mirror 220 at the predetermined speed, and 23 designating the above described prism mirror.

The rotating mirror 220 is adapted so that a surface thereof, which is a reflecting surface, may be divided into six equal parts of 60° each, and three sets of reflecting surfaces 22a, 22b, 22c consisting of two surfaces opposite to each other may be arranged perpendicularly to the rotational axis at different distances along the rotational axis.

Accordingly, when the light beam 2 is incident upon the reflecting surface of the rotating mirror 220, the reflecting position of the incident light beam is different (and the optical path length of the light beam 2 is different) in dependence upon the reflecting surfaces 22a, 22b, 22c where the incident light beam 2 is reflected, so that one incident light beam 2 is switched over to three parallel beams 2a, 2b, 2c in a time division manner by rotation of the rotating mirror 220.

Of the above-mentioned three parallel beams 2a, 2b, 2c, the outer beams 2a, 2c are incident upon mirror surfaces 23a, 23c of opposite sides of the prism mirror 23, where they are reflected toward the respective perforated mirrors 25, while the middle beam 2b is incident upon a front prism surface 23b of the prism mirror 23 and passes through the prism mirror 23 to proceed straight toward the respective perforated mirror 25.

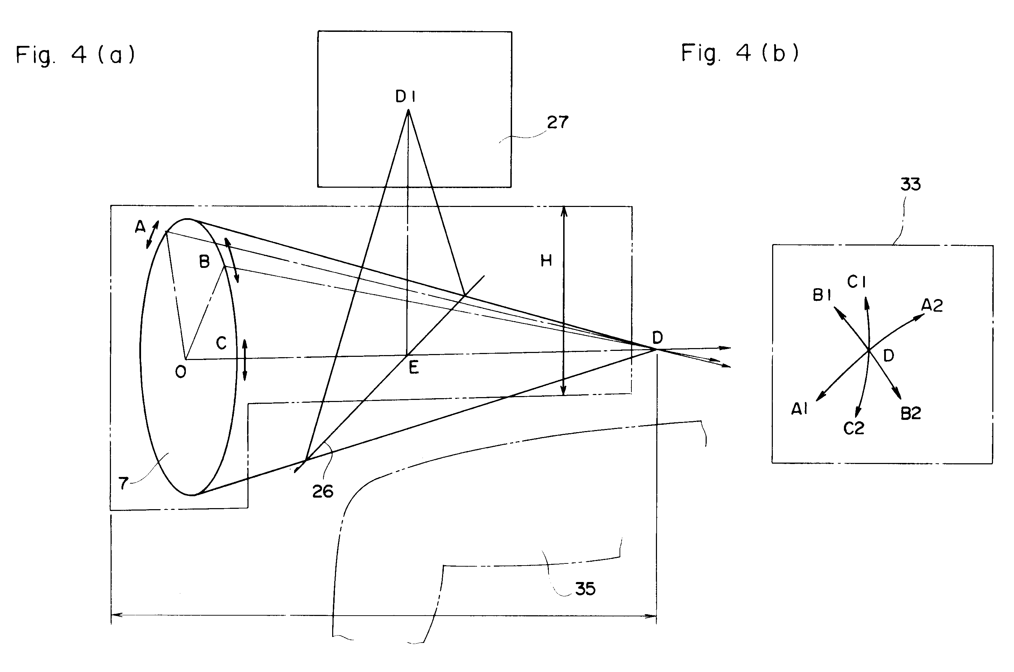

Next, the fundamental construction of an optical system is described below with reference to FIG. 4. Referring to FIG. 4 (a), an optical system to the rear of the hologram disk 7 can be expressed by a cone with the hologram disk 7 as the base and a condensing position D of the hologram lenses 6 as the apex. Since the light beam 2 incident upon three points A, B, C on the hologram disk 7 is deflected in a peripheral direction of the hologram disk 7, scanning lines are generated in the directions A1A2, B1B2, C1C2 with D as a center in a plane 33 parallel to the hologram disk 7 and including the condensing point D, as shown in FIG. 4 (b). Since intersecting angles among these scanning lines are equal to ∠AOB and ∠BOC, they can be easily selected by changing the intersecting angles, i.e. the incident positions A, B, C.

Although only one scanning line is shown in each direction in FIG. 4 (b), in order to generate a plurality of scanning lines in each direction, it is necessary only to install the desired number of hologram lenses with the condensing point D being different in, for example, a radial direction of the hologram disk 7 (a direction shown by an arrow H in FIG. 4 (a)) on the hologram disk 7 in the same manner as in the prior art.

Such an optical system is bent by 90° by means of the mirror 26 with a foot E of a perpendicular line drawn from a center D1 of the reading window 27 to a line OD connecting a center O of the hologram disk 7 with the condensing point D as a center. The scanning surfaces of light beams are formed on the reading window 27 by setting a distance from the point D1 on the reading window 27 to the point E so as to be equal to a distance from the point E to the point D. Thus, the number of the directions of scanning lines is equal to that of incident positions of the light beams 2a, 2b, 2c upon the hologram disk 7.

In operation, the light beam 2 irradiated from the laser oscillator 1 is bent by the mirror 20 to pass through the lens 21 and proceed toward the beam-splitter 22, where, as shown in FIG.3, the light beam 2 is reflected by the mirror 22a, the mirror 22b or the mirror 22c in dependence upon the speed of beam-splitter 22 rotated by the motor 22m, whereby three parallel reflected beams 2a, 2b, 2c are obtained in a time division manner. These reflected beams are incident upon the mirror surface 23a, the prism surface 23b and the mirror surface 23c of the prism mirror 23 respectively. As a result, the light beams 2a and 2c are reflected by the mirror surfaces 23a and 23c to proceed in the directions shown by arrows A and B respectively, while the light beam 2b passes through the prism mirror 23 to proceed in the direction shown by an arrow C. These light beams are reflected by the mirror 24 and are incident upon hologram lenses on the hologram disk 7 after passing through the openings 25a, 25a, 25a of the respective perforated mirrors 25 shown in FIG.1. The light beam 2 diffracted by the hologram lenses is reflected by the mirror 26, condensed on the reading window 27 and reflected by bar codes passing over the reading window 27 to generate scattered light 28. The scattered light 28a (properly speaking, the scattered light is in the form of scattered beams equal in number to the number of light beams diffracted by hologram lenses but only one scattered beam 28a is shown for simplification) in the drawing is incident upon the hologram lens along a path which in the reverse of that of the light beam 2, is reflected by the perforated mirror 25 and then is condensed on the photoelectric conversion apparatus 29 to be converted into an electric signal.

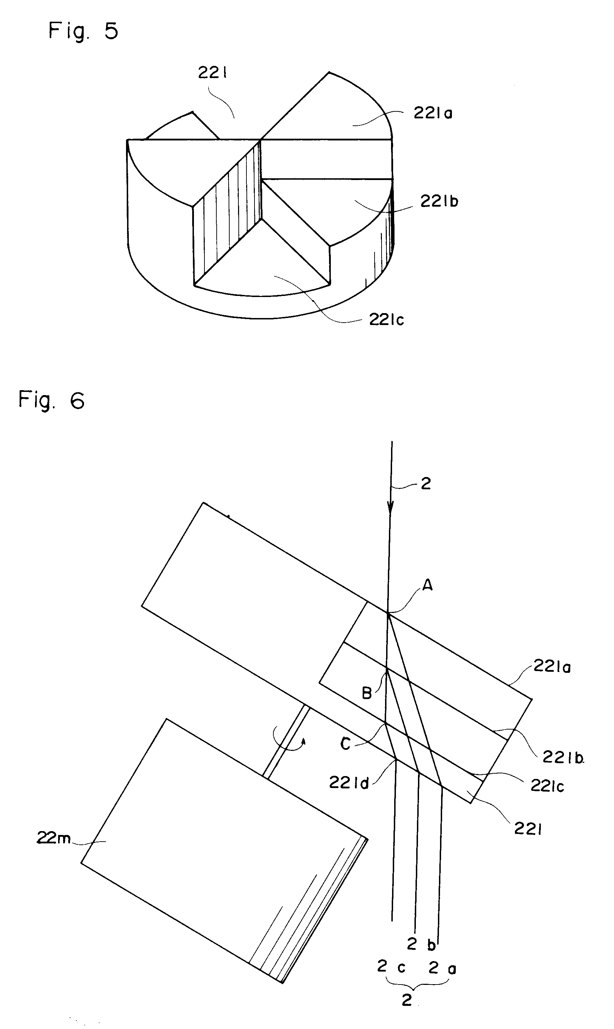

FIG. 5 is a schematic diagram showing a beam-splitter 22 according to the second embodiment of the present invention. The beam-splitter 22 has the same construction as the beam-splitter shown in the above FIG. 2 excepting that it is formed of a light transmitting rotating member 221 made of light transmitting material, such as a prism. Accordingly, light transmitting surfaces 221a, 221b, 221c in this embodiment correspond to the reflecting surfaces 22a, 22b, 22c in FIG. 2.

In the beam splitter 22 constructed in such a manner, as shown in FIG.6, the light beam 2 incident upon the light transmitting surface 221a is refracted at a point A on the light transmitting surface 221a and then refracted again on the light transmitting surface 221d to become a beam 2a after passing through the light transmitting rotating member 221. Subsequently, the light beam 2 incident upon the light transmitting surface 221b by rotating the light transmitting rotating member 221 by 60° is refracted at a point B on the light transmitting surface 221b and then refracted again on the light transmitting surface 221d to become a beam 2b after passing through the light transmitting rotating member 221. The light beam 2 incident upon the light transmitting surface 221c by further rotating the light transmitting rotating member 221 is refracted at a point C on the light transmitting surface 221c and then refracted again on the light transmitting surface 221d to become a beam 2c after passing through the light transmitting rotating member 221. As described above, the incident light beam can be switched over into three light beams 2a, 2b, 2c parallel to each other, by rotating the light transmitting rotating member 221 by means of the motor 22m.

In addition, the light beams 2a, 2b, 2c are projected directly or indirectly after being reflected by a mirror and the like upon the prism mirror 23.

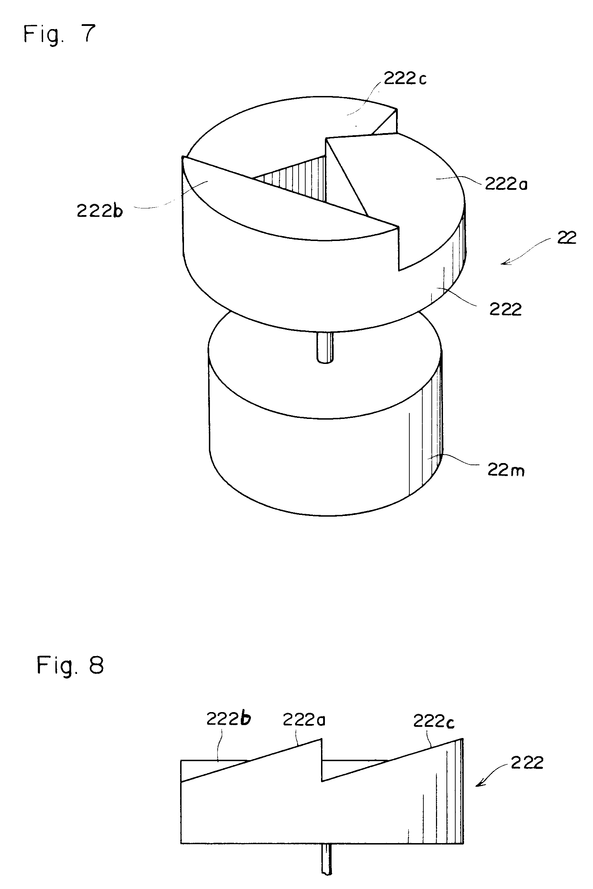

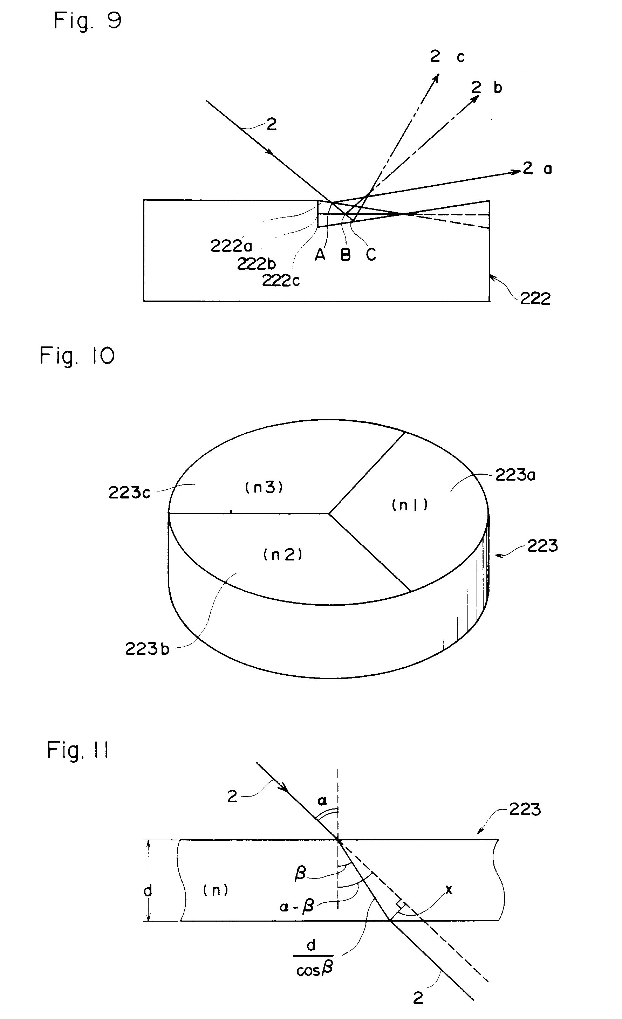

Referring to FIG. 7, which is a schematic diagram showing a beam-splitter 22 according to a third embodiment of the present invention, FIG. 8, which is a side view showing a construction of a rotating mirror 222 of the beam-splitter 22 shown in FIG. 7, and FIG. 9, which is a schematic diagram showing the operation of the rotating mirror 222 shown in FIG. 8, reference numeral 2 designates an incident light beam, 222 designating a rotating mirror provided with three reflecting surfaces 222a, 222b, 222c arranged so as to be radially divided with rotational axis thereof as a center, 3 designating a reflected light beam, and 22m designating a motor for rotating the rotating mirror 222 at the predetermined speed.

As shown in FIGS. 7, 8, the rotating mirror 222 is composed of three reflecting surfaces 222a, 222b, 222c different from each other in inclination, obtained by divided the mirror into equal three parts, and the mirror is rotated by the motor 22m at the predetermined speed.

Referring particularly to FIG. 9, the light beam 2 incident upon the reflecting surface 222a is reflected at a point A on the reflecting surface 222a in accordance with the law of reflection to become a reflected light beam 2a. Thereafter, the light beam 2 is incident upon the reflecting surface 222b by rotating the rotating mirror 222 by 120°. At this time, the incident light beam 2 is reflected at a point B on the reflecting surface 222b to become a reflected light beam 2b. The light beam 2 is incident upon the reflecting surface 222c by further rotating the rotating mirror 222 by 120°. At this time, the incident light beam 2 is reflected at a point C on the reflecting surface 222c to become a reflected light beam 2c. Thus, one light beam 2 can be switched-over to three reflected light beams 2a, 2b, 2c different from each other in direction by rotating the rotating mirror 222 by means of the motor 22m.

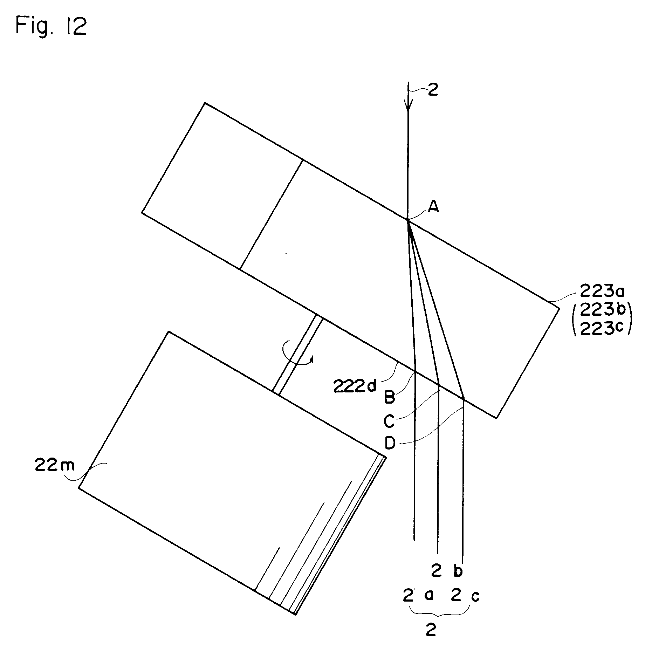

In addition, in the case where the rotating mirror 222 forming the beam-splitter 22 is of a light transmitting material, as shown in FIG.12, the light beam 2 incident upon the differently inclined surfaces 222a, 222b, 222c, respectively is also refracted by the surfaces 222a, 222b, 222c and by a surface 222d from which the light beam emerges, so it can be switched-over to the beams 2a, 2b, 2c being different in direction.

Referring to FIG. 10, which is a schematic diagram showing the construction of a light transmitting rotating member 223 used in a beam-splitter 22 according to the fourth embodiment of the present invention, and FIGS. 11, 12, which are schematic diagrams showing the operation of the light transmitting rotating member 223 shown in FIG. 10, reference numeral 2 designates an incident light beam, 223 designating a light transmitting rotating member, 2 designating a transmitted light beam, and 22m designating a motor for rotationally driving the light transmitting rotating member 223 at the predetermined speed. As shown in FIG. 10, the light transmitting rotating member 223 comprises three light transmitting members 223a, 223b, 223c obtained by dividing it into three equal parts arranged in a radially divided manner around the rotational axis thereof. In addition, the three light transmitting members 222a, 222b, 222c are different in refractive index. The refractive indexes n₁, n₂, n₃ of the light transmitting members 222a, 222b, 222c, for example, are 1.5, 1.7 and 1.9 respectively.

Referring particularly to FIG. 12, the light beam 2 incident upon the light transmitting surface 223a is refracted at a point A on the surface of the light transmitting member 223a with the refractive index being n₁ and then refracted again at a point B on the reverse surface of the light transmitting member 223a to become a beam 2a after passing through the light transmitting member 223a. Thereafter, the light beam 2 incident upon the light transmitting member 223b with the refractive index n₂ by rotating the light transmitting rotating member 223 by 120° is refracted at a point A on the surface of the light transmitting member 223b and then refracted again at a point C on the reverse surface of the light transmitting member 223b to become a beam 2b after passing through the light transmitting member 223b. The light beam 2 incident upon the light transmitting member 223c with the refractive index n₃ by further rotating the light transmitting rotating member 223 by 120° is refracted at a point A on the surface of the light transmitting member 223c and then refracted again at a point D on the reverse surface of the light transmitting member 223c to become a beam 2c after passing through the light transmitting member 223c. Thus, the incident light beam 2 can be switched-over to three light beams 2a, 2b, 2c by rotating the light transmitting rotating member 223 by means of the motor 22m.

FIG. 11 shows the relation between the displacement x of the light beam let out and the refractive index n, the incidence angle α , the thickness of the light transmitting member d and the refractive angle β .

The principle of the refractive index is expressed by the equation:

$\text{sin α = n·sin β .}$

From this equation the following equation for expressing the beam displacement x is obtained: 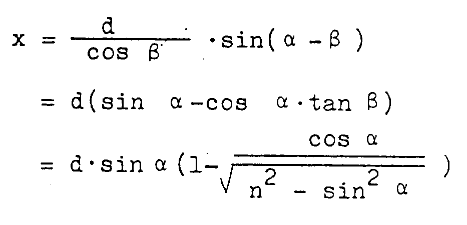
And, from this equation the following differential equation is introduced: 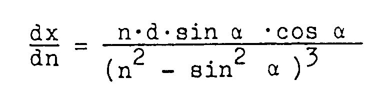
Accordingly, the beam displacement Δx due to the refractive index difference Δn is expressed by the following equation: 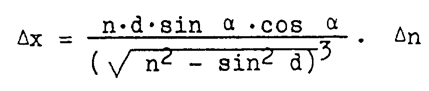
Since optical glass has a wide range of refractive index from about 1.45 to about 1.95 in dependence upon the composition thereof, one incident light beam 2 can be switched-over to three light beams 2a, 2b, 2c parallel to each other by suitably selecting and setting the thickness d of the light transmitting member, the refractive indexes n₁, n₂, n₃ of the light transmitting members 223a, 223b, 223c and the incidence angle α of the light beam.

Although in an apparatus according to the above described embodiment the light beam is adapted to divide into multiple directions before being incident upon the hologram disk, thereby requiring mirrors equal in number to the directions of the light beam in an optical system, between the laser oscillator and the hologram disk, the mirrors may be small-sized as the light beam is not deflected. In addition, since the optical system between the laser oscillator and the hologram disk includes almost all the major parts therein and only one mirror is necessary between the hologram disk and the reading window, the major parts of the optical system, i.e. the optical system between the laser oscillator and the hologram disk, can be collectively housed in a side opposite to the side where an operator is positioned,and the simplified optical system between the hologram disk and the reading window having a large optical path length can be installed at the operator's side. As a result, the operator's side portion can be thin-walled and the operator can operate putting his or her knees in the space below the scanner (refer to 35 in FIG. 4) without changing the width and the length, unlike the conventional scanner. Operation in a seated posture is therefore is possible.

Further, in an apparatus according to the present invention it is necessary only to install a large number of small-sized mirrors in the optical system in front of the hologram disk and one large-sized mirror in the optical system to the rear of the hologram disk, and as a result, the apparatus need not be of large size and the weight thereof hardly increases even in the case where the number of directions of scanning lines is increased in order to make highly accurate reading of bar codes of every direction possible.

In addition, in an apparatus according to the present invention, the angle (direction) of scanning lines can be easily changed by changing the incident position of the light beam upon the hologram disk.

Also, in an apparatus according to the present invention the time of switching-over the light beam to various directions can be easily changed by changing the shape and size of the reflecting surface or the light transmitting surface in a stepped portion of the beam splitter.

Also, if the major optical parts are arranged in the side opposite to the operator's, the scanner can be made thinner. In addition, the portion having a larger cross section of the casing may be expanded only in any one direction, i.e. only toward the upper side surface, or the lower side surface and either side surface of the casing. In addition, it is not always necessary to instal the hologram disk so as to be strictly perpendicular to the reading window.

Although scanning lines in three directions are described in the above embodiments, the number of directions may be optionally selected. Although one mirror 26 is disposed between the hologram disk 7 and the reading window 27 in the above described embodiments, a plurality of mirrors can be used to obtain scanning lines in other directions on the scanning surface. Although the light beam is shown as being focussed on the reading window in FIG.1, the light beam may be focussed at a point spaced from the reading window to obtain the scanning lines. In addition, the prism mirror 23 may be composed of mirrors combined. Further, although photoelectric conversion apparatuses 29 equal in number to the number of incident beams in number have been disclosed in the above described embodiments, any number and arrangement can be selected by the combination of mirrors and the like.

## Claims

1. A stationary hologram scanner comprising a hologram disk (7) in which a plurality of hologram lenses are peripherally arranged for deflecting a light beam and projecting it upon bar codes to be scanned, and means for successively directing the light beam to the hologram lenses, characterised in that the light beam directing means comprises means (22,23,24) for successively directing the light beam to a discrete number of different locations on a plane occupied by the hologram disk, the said number being equal to the number of scanning directions necessary for reading the bar codes.

2. A scanner as claimed in claim 1, wherein said light beam directing means comprises a rotatable light transmitting member (221) which is rotatable about a rotational axis and which is made of a light transmitting material, the said member being radially divided around said rotational axis into a plurality of sectors (221a,221b,221c) which differ from each other in height as measured along the direction of said rotational axis, and a motor (22m) for rotationally driving said rotatable member (221) at a predetermined speed, the light beam being incident on each of said sectors in turn as the said rotatable member rotates, whereby the beam is caused to travel, after passing through said rotatable member, successively along each of a plurality of mutually parallel paths.

3. A scanner as claimed in claim 1, wherein said light beam directing means comprises a rotatable member (220) which is rotatable about a rotational axis and which is radially divided around said rotational axis into a plurality of sectors (22a,22b,22c) which differ from each other in height as measured along the direction of said rotational axis, each sector having an upper reflective surface, and a motor (22m) for rotationally driving said rotatable member (220) at a predetermined speed, the light beam being incident on each of said sectors in turn as said rotatable member rotates, whereby the beam is caused to travel, after reflection from said upper reflective surfaces successively along each of a plurality of mutually parallel paths.

4. A scanner as claimed in claim 1, wherein said light beam directing means comprises a rotatable light transmitting member (223) which is rotatable about a rotational axis, the said member being radially divided around said rotational axis into a plurality of sectors (223a,223b,223c) which differ from each other in the refractive index (n1,n2,n3) of the material of which they are made, and a motor (22m) for rotationally driving said rotatable member at a predetermined speed, the light beam being incident on each of said sectors in turn as said rotatable member rotates, whereby the beam is caused to travel, after passing through said rotatable member, successively along each of a plurality of mutually parallel paths.

5. A scanner as claimed in claim 1, wherein said light beam directing means comprises a rotatable light transmitting member which is rotatable about a rotational axis and which is made of a light transmitting material, the said member being radially divided around said rotational axis into a plurality of sectors each of which has a surface transverse to the said rotational axis at a different angle of inclination thereto, and a motor for rotationally driving said rotatable member at a predetermined speed, the light beam being incident on each of said surfaces in turn as said rotatable member rotates, whereby the beam is caused to travel, after passing through said rotatable member, successively along each of a plurality of different paths.

6. A scanner as claimed in claim 1, wherein said light beam directing means comprises a rotatable member (222) which is rotatable about a rotational axis and which is radially divided around said rotational axis into a plurality of sectors sectors (222a,222b,222c) each of which has a reflective surface transverse to the said rotational axis at a different angle of inclination thereto, and a motor (22m) for rotationally driving said rotatable member at a predetermined speed, the light beam being incident on each of said surfaces in turn as said rotatable member rotates, whereby the beam is caused to travel, after reflection from said rotatable member, successively along each of a plurality of different paths.

7. A scanner as claimed in any preceding claim comprising a casing (31) provided with a window (27) for reading said bar codes therethrough, said casing having a first portion (31a) of larger vertical sectional area in which are housed the majority of optical components, and a second portion (31b) of smaller vertical sectional area in which the said window (27) is formed.

8. A scanner as claimed in claim 7, wherein the optical components housed in the said first portion (31a) of the casing (31) include the means (22,23,24) for successively directing the light beam to a discrete number of different locations, the hologram disk (7), the plane of which is substantially perpendicular with respect to said window (27), and a photoelectric conversion apparatus (29) for converting light reflected by said bar codes and collected by said hologram lenses into electric signals.

9. A scanner as claimed in claim 8, comprising a mirror (26) located between said hologram disk (7) and said window (27) for directing light from said hologram disk to said window and vice versa.

## Patentansprüche

1. Stationärer Hologramm-Scanner mit einer Hologramm-Scheibe (7) mit mehreren umfangsmäßig angeordneten Hologramm-Linsen, um einen Lichtstrahl abzulenken und ihn auf abzutastende Strichkodierungen zu projizieren, und mit einer Einrichtung zum sukzessiven Ausrichten des Lichtstrahls auf die Hologramm-Linsen,
**dadurch gekennzeichnet,**
daß die Lichtstrahlausricht-Einrichtung Vorrichtungen (22,23,24) zum sukzessiven Ausrichten des Lichtstrahls auf eine diskrete Anzahl verschiedener Stellen auf einer von der Hologramm-Scheibe eingenommenen Ebene aufweist, wobei die Anzahl gleich der zum Lesen der Strichkodierungen erforderlichen Anzahl von Abtastrichtungen ist.

2. Scanner nach Anspruch 1, bei dem die Lichtstrahlausricht-Einrichtung aufweist: ein drehbares Lichtdurchlaßteil (221), das um eine Drehachse drehbar ist und aus einem lichtdurchlässigen Material gefertigt ist, wobei das Teil um die Drehachse in mehrere Sektoren (221a, 221b,221c) radial unterteilt ist, die längs der Richtung der Drehachse betrachtet unterschiedliche Höhe aufweisen, und einen Motor (22m) zum drehbaren Antreiben des drehbaren Teils (221) mit vorbestimmter Geschwindigkeit, wobei der Lichtstrahl bei Drehung des drehbaren Teils seinerseits auf jeden der Sektoren auftrifft, wodurch bewirkt wird, daß der Strahl nach dem Passieren des drehbaren Teils sukzessive längs eines jeden von mehreren zueinander parallelen Wegen verläuft.

3. Scanner nach Anspruch 1, bei dem die Lichtstrahlausricht-Einrichtung aufweist: ein drehbares Teil (220), das um eine Drehachse drehbar ist und um die Drehachse in mehrere Sektoren (22a,22b,22c) radial unterteilt ist, die längs der Richtung der Drehachse betrachtet unterschiedliche Höhe aufweisen, wobei jeder Sektor eine obere reflektierende Fläche hat, und einen Motor (22m) zum drehbaren Antreiben des drehbaren Teils (220) mit vorbestimmter Geschwindigkeit, wobei der Lichtstrahl bei Drehung des drehbaren Teils seinerseits auf jeden der Sektoren auftrifft, wodurch bewirkt wird, daß der Strahl nach Reflektion von den oberen reflektierenden Flächen sukzessive längs eines jeden von mehreren zueinander parallelen Wegen verläuft.

4. Scanner nach Anspruch 1, bei dem die Lichtstrahlausricht-Einrichtung aufweist: ein drehbares Lichtdurchlaßteil (223), das um eine Drehachse drehbar ist, wobei das Teil um die Drehachse in mehrere Sektoren (223a,223b,223c) radial unterteilt ist, die sich hinsichtlich des Brechungsindexes (n1,n2,n3) des Materials, aus dem sie gefertigt sind, voneinander unterscheiden, und einen Motor (22m) zum drehbaren Antreiben des drehbaren Teils mit vorbestimmter Geschwindigkeit, wobei der Lichtstrahl bei Drehung des drehbaren Teils seinerseits auf jeden der Sektoren auftrifft, wodurch bewirkt wird, daß der Strahl nach dem Passieren des drehbaren Teils sukzessive längs eines jeden von mehreren zueinander parallelen Wegen verläuft.

5. Scanner nach Anspruch 1, bei dem die Lichtstrahlausricht-Einrichtung aufweist: ein drehbares Lichtdurchlaßteil, das um eine Drehachse drehbar ist und aus einem lichtdurchlässigen Material gefertigt ist, wobei das Teil um die Drehachse in mehrere Sektoren radial unterteilt ist, von denen jeder eine Oberfläche aufweist, die quer zu der Drehachse unter unterschiedlichem Neigungswinkel zu dieser verläuft, und einen Motor zum drehbaren Antreiben des drehbaren Teils mit vorbestimmter Geschwindigkeit, wobei der Lichtstrahl bei Drehung des drehbaren Teils seinerseits auf jede der Oberflächen auftrifft, wodurch bewirkt wird, daß der Strahl nach dem Passieren des drehbaren Teils sukzessive längs eines jeden von mehreren unterschiedlichen Wegen verläuft.

6. Scanner nach Anspruch 1, bei dem die Lichtstrahlausricht-Einrichtung aufweist: ein drehbares Teil (222), das um eine Drehachse drehbar ist und um die Drehachse in mehrere Sektoren (222a,222b,222c) radial unterteilt ist, von denen jeder eine reflektierende Oberfläche aufweist, die quer zu der Drehachse unter unterschiedlichem Neigungswinkel zu dieser verläuft, und einen Motor (22m) zum drehbaren Antreiben des drehbaren Teils mit vorbestimmter Geschwindigkeit, wobei der Lichtstrahl bei Drehung des drehbaren Teils seinerseits auf jede der Oberflächen auftrifft, wodurch bewirkt wird, daß der Strahl nach Reflektion von dem drehbaren Teil sukzessive längs eines jeden von mehreren unterschiedlichen Wegen verläuft.

7. Scanner nach einem der vorhergehenden Ansprüche, mit einem Gehäuse (31), das ein Fenster (27) zum Lesen der Strichkodierungen durch dieses hindurch aufweist, wobei das Gehäuse einen größeren vertikalen Schnittbereich aufweisenden ersten Teil (31a), in dem die Mehrzahl der optischen Komponenten untergebracht ist, und einen kleineren vertikalen Schnittbereich aufweisenden zweiten Teil (31b) aufweist, in dem das Fenster (27) ausgebildet ist.

8. Scanner nach Anspruch 7, bei dem die in dem ersten Teil (31a) des Gehäuses (31) untergebrachten optischen Komponenten die Vorrichtungen (22,23,24) zum sukzessiven Ausrichten des Lichtstrahls auf eine diskrete Anzahl verschiedener Stellen, die Hologram-Scheibe (7), deren Ebene im wesentlichen rechtwinklig zu dem Fenster (27) verläuft, und eine photoelektrische Konversionseinrichtung (29) zum Konvertieren von den Strichkodierungen reflektierten und von der Hologramm-Linsen gesammelten Lichtes in elektrische Signale aufweist.

9. Scanner nach Anspruch 8, mit einem zwischen der Hologramm-Scheibe (7) und dem Fenster (27) angeordneten Spiegel (26) zum Ausrichten von Licht von der Hologramm-Scheibe auf das Fenster und umgekehrt.

## Revendications

1. Lecteur à balayage à hologramme fixe, comprenant un disque hologramme (7) à la périphérie duquel est disposée une pluralité de lentilles hologrammes qui modifient la direction d'un faisceau lumineux pour le projeter sur un code à barres à balayer, et des moyens pour diriger successivement le faisceau lumineux sur les lentilles hologrammes, caractérisé en ce que les moyens pour diriger le faisceau lumineux comprennent des moyens (22, 23, 24) pour successivement diriger le faisceau lumineux sur un nombre discret d'emplacements différents d'un plan contenant le disque hologramme, ledit nombre étant égal au nombre de directions de balayage nécessaire pour la lecture de codes à barres.

2. Lecteur à balayage selon la revendication 1, dans lequel lesdits moyens pour diriger le faisceau lumineux comportent un organe de transmission de lumière rotatif (221) qui tourne autour d'un axe de rotation et qui est réalisé dans un matériau transmetteur de lumière, ledit organe étant radialement divisé, autour dudit axe de rotation, en une pluralité de secteurs (221a, 221b, 221c) qui sont à des hauteurs différentes les uns des autres, mesurées dans la direction de l'axe de rotation, et un moteur (22m) d'entraînement en rotation de l'organe rotatif (221) à une vitesse prédéterminée, le faisceau de lumière tombant sur chacun des secteurs à son tour lorsque l'organe rotatif tourne, de façon que le faisceau soit amené à se propager, après traversée de l'organe rotatif, successivement le long de chacun d'une pluralité de trajets mutuellement parallèles.

3. Lecteur à balayage selon la revendication 1, dans lequel les moyens pour diriger le faisceau lumineux comportent un organe rotatif (220) qui tourne autour d'un axe de rotation et qui est divisé radialement, autour dudit axe de rotation, en une pluralité de secteurs (22a, 22b, 22c), qui sont situés à des hauteurs différentes, mesurées dans la direction dudit axe de rotation, chaque secteur ayant une surface supérieure réfléchissante, et un moteur (22m) d'entraînement en rotation dudit organe rotatif (220) à une vitesse prédéterminée, le faisceau lumineux tombant sur chacun des secteurs à son tour lorsque ledit organe rotatif tourne, de façon que le faisceau lumineux soit amené à se propager, après réflexion sur lesdites surfaces supérieures réfléchissantes, successivement le long de chacun d'une pluralité de trajets mutuellement parallèles.

4. Lecteur à balayage selon la revendication 1, dans lequel les moyens pour diriger le faisceau lumineux comportent un organe transmetteur de lumière (223) qui est rotatif autour d'un axe de rotation, ledit organe étant radialement divisé, autour de l'axe de rotation, en une pluralité de secteurs (223a, 223b, 223c) qui diffèrent l'un de l'autre par l'indice de réflexion (n₁, n₂, n₃) du matériau dans lequel ils sont réalisés, et un moteur (22 m) d'entraînement en rotation dudit organe rotatif à une vitesse prédéterminée, le faisceau lumineux tombent sur chacun des secteurs à son tour lorsque ledit organe de rotation tourne, de façon que le faisceau soit amené à se propager, après traversée dudit organe rotatif, successivement le long de chacun d'une pluralité de trajets mutuellement parallèles.

5. Lecteur à balayage selon la revendication 1, dans lequel les moyens pour diriger le faisceau lumineux comportent un organe transmetteur de lumière qui est rotatif autour d'un axe de rotation et qui est réalisé en un matériau transmetteur de lumière, ledit organe étant radialement divisé, autour de l'axe de rotation, en une pluralité de secteurs dont chacun comprend une surface transversale audit axe de rotation, les angles d'inclinaison sur l'axe de rotation étant différents, et un moteur d'entraînement en rotation dudit organe rotatif à une vitesse prédéterminée, le faisceau lumineux tombent sur chacune desdites surfaces à son tour lorsque l'organe rotatif tourne, de façon que le faisceau soit amené à se propager, après traversée dudit organe rotatif, successivement le long de chacun d'une pluralité de trajets mutuellement parallèles.

6. Lecteur à balayage selon la revendication 1, dans lequel les moyens pour diriger le faisceau lumineux comportent un organe (222) qui est rotatif autour d'un axe de rotation et qui est radialement divisé, autour de l'axe de rotation, en une pluralité de secteurs (222a, 222b, 222c) comportant chacun une surface de réflexion transverse audit axe de rotation, suivant un angle différent d'inclinaison sur ledit axe de rotation, et un moteur (22m) d'entraînement dudit organe rotatif à une vitesse prédéterminée, le faisceau lumineux tombent sur chacune desdites surfaces à son tour lorsque ledit organe rotatif tourne, de façon que le faisceau soit amené à se propager, après réflexion sur ledit organe rotatif, successivement le long de chacun d'une pluralité de trajets mutuellement parallèles.

7. Lecteur à balayage selon l'une quelconque des revendications précédentes, comprenant un corps (31) munie d'une fenêtre (27) à travers laquelle sont lus les codes à barres, ledit corps comportant une première partie (31a) de plus grande section verticale dans laquelle est logée la majorité des composants optiques, et une deuxième partie (31b) de plus petite section verticale dans laquelle est ménagée ladite fenêtre (27).

8. Lecteur à balayage selon la revendication 7, dans lequel les composants optiques logés dans ladite première partie (31a) du corps (31) comprennent les moyens (22, 23, 24) qui dirigent successivement le faisceau lumineux vers un nombre discret d'emplacements différents, le disque hologramme (7), le plan qui est sensiblement perpendiculaire à ladite fenêtre (27), et un dispositif de conversion photoélectriuqe (29) pour convertir en signaux électriques la lumière réfléchie par les codes à barres et recueillie par les lentilles hologrammes.

9. Lecteur à balayage selon la revendication 8, comprenant un miroir (26) disposé entre le disque hologramme (7) et la fenêtre (27) pour diriger la lumière du disque hologramme vers la fenêtre et inversement.
